(19) Europäisches Patentamt
European Patent Office
Office européen des brevets

(11) **EP 4 764 977 A1**

(12) **EUROPEAN PATENT APPLICATION**

(43) Date of publication:
**24.06.2026 Bulletin 2026/26**

(21) Application number: **24315599.1**

(22) Date of filing: **20.12.2024**

(51) International Patent Classification (IPC):
**G06N 10/40** (2022.01)    **G06N 10/60** (2022.01)

(52) Cooperative Patent Classification (CPC):
**G06N 10/40; G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Pasqal**
**91120 Palaiseau (FR)**

(72) Inventors:
- **Cazals, Pierre**
  **91120 PALAISEAU (FR)**
- **Coelho, Wesley da Silva**
  **91120 PALAISEAU (FR)**
- **Sorondo, Amalia**
  **91120 PALAISEAU (FR)**

(74) Representative: **Slingsby Partners LLP**
**1 Kingsway**
**London WC2B 6AN (GB)**

(54) **METHOD FOR DETERMINING A SET OF ONE OR MORE OBJECTS USING A QUANTUM COMPUTER**

(57)     There is presented a method comprising positioning a first set of matter particles in a quantum computer according to a first spatial layout. A determination of the first spatial layout comprises assigning at least one spatial position in the layout to at least one node of the plurality of nodes using data associated with at least one edge of the graph. The first spatial layout associated with a first subset of nodes of the plurality of nodes. The method then performs a first quantum computation, using the quantum computer, using the first set of the matter particles spatially positioned according to the first spatial layout. The first quantum computation providing a first output set of one or more nodes. The method then positions a second set of the matter particles in the quantum computer according to a second spatial layout. The second spatial layout associated with a second subset of the plurality of nodes. At least one graph node not in the second subset is: a node of the first output set; or, a node that is edge connected to a node of the first output set via a single edge connection. The method performs a second quantum computation, using the quantum computer, using the second set of the matter particles spatially positioned according to the second spatial layout. The second quantum computation providing a second output set of one or more nodes. The method determining the set of one or more nodes at least from the second output set.

Fig. 4

100

EP 4 764 977 A1

**Description**

Field of the invention

The field of the invention is for determining one or more objects, representable by nodes of a graph, using a quantum computer, in particular, but not limited to, determining a solution to a problem using a neutral atom quantum computer wherein the solution comprises a plurality of nodes.

Background

Graphs can typically be used to encode problems to be solved. Graphs have vertices (also referred to as nodes) and edges that each connect two nodes. Graph based data is often represented in 2D or 3D space where the values of edges between nodes equates to distances in graph-space. Quantum computers have been previously used to solve graph-based problems. Examples of such computers are neutral atom quantum computers, superconducting quantum computers. For initial problems, such as, but not limited to, problems involving arrangements of atoms, the use of a Hamiltonian operator within an evolution operator (as presented in equation 1 herein) maybe required. The evolution operator relates the output state $|\psi(t)\rangle$ of the qubits at time 't', to a solution to the problem we are trying to solve:

$$|\psi(t)\rangle = e^{-\int_0^t iH(t)dt} |\psi(0)\rangle$$

[Equ. 1]

where $|\psi(0)\rangle$ is the initial state of the qubits in the quantum system of the quantum computer and H(t) is the Hamiltonian operator that encodes the problem. In a neutral atom quantum computer one or more driving electromagnetic (EM) fields (typically one or more lasers) is imparted onto the qubits of the quantum computer. Typically, the Hamiltonian H(t) contains the data for the qubit positions and the properties of the driving EM field. The properties of the EM field that may vary over time and that are represented in the Hamiltonian operator are the Rabi frequency and wavelength detuning amounts.

Typically, a graph problem is encoded into a quantum computer by mapping each graph vertex of the graph to a different element that represents a qubit (qubit-element) of the quantum computer. An example of a qubit element is a neutral atoms of a neutral atom quantum computer. As such, the full graph is represented in the same quantum computation. As graphs become larger, the number of qubit-elements required to represent the graph correspondingly increases. This may result in a limitation of the maximum size of graph problem that a quantum computer can handle. Furthermore, the more qubit elements are used, the greater the chances are that an error may occur during the computation. Increasing the number of qubit-elements typically increases the chances that an error may occur. For example, an atom may undesirably escape an optical trap during a quantum computation, therefore the more atoms a quantum computation uses, the higher the chance of an atom escaping. Other issues may exist the larger the number of qubits required to perform the computation. One such issue may be uniformity of Electromagnetic (EM) radiation input to drive the computation. If a single EM radiation input, from a single source is desired to be input for all the neutral atoms, the uniformity of EM radiation amplitude across a very large number of atoms may present issues with the quantum computation.

The paper "Solving optimization problems with Rydberg analog quantum computers: Realistic requirements for quantum advantage using noisy simulation and classical benchmarks" by M. Serret et al., arXiv: 2006.11190v3, describes compute quantitative requirements on the system sizes and noise levels that these platforms must fulfill to reach quantum advantage in approximately solving the Unit-Disk Maximum Independent Set problem. The qubits in this paper are already in a set positioned layout. This paper does not take the step of assigning graph nodes to a layout that is then used to position qubits.

Summary

In a first aspect there is presented a method for determining a set of one or more objects, representable by a set of one or more nodes of a graph, using a quantum computer;

the quantum computer using matter particles to represent a plurality of qubits;

the graph comprising:

a plurality of nodes;

a plurality of edges;

the method comprising:

positioning a first set of the matter particles in the quantum computer according to a first spatial layout, wherein a determination of the first spatial layout comprises assigning at least one spatial position in the layout to at least one node of the plurality of nodes using data associated with at least one edge of the graph; the first spatial layout associated with a first subset of nodes of the plurality of nodes;

performing a first quantum computation, using the quantum computer, using the first set of the matter particles spatially positioned according to the first spatial layout, the first quantum computation providing a first output set of one or more nodes;

positioning a second set of the matter particles in the quantum computer according to a second spatial layout; the second spatial layout associated with a second subset of the plurality of nodes wherein at least one graph node not in the second subset is:

a node of the first output set; or,

a node that is edge connected to a node of the first output set via a single edge connection;

performing a second quantum computation, using the quantum computer, using the second set of the matter particles spatially positioned according to the second spatial layout, the second quantum computation providing a second output set of one or more nodes;

determining the set of one or more objects at least from the second output set.

The first aspect may be adapted according to any features describes in examples herein, including but not limited to, any one or more of the following options.

Optionally, the objects may be data objects.

Optionally, each object may correspond to a different graph node. The set of one or more of objects may be, representable by a set of one or more respective nodes of the graph.

Optionally, the objects may be mathematical objects.

Optionally, the objects represent information.

Optionally, the objects are objects of an optimisation problem.

Optionally, the method may be used to determine a set of objects of an optimisation problem.

Optionally, the edges represent relationships between objects.

Optionally, the first set of the matter particles are unassigned to positions in the quantum computer prior to the said positioning of the first set of the matter particles.

Optionally, the second set of the matter particles are unassigned to positions in the quantum computer prior to the said positioning of the of the second set of the matter particles.

Optionally, the method may remove, from its position in the quantum computer, at least one of the first set of matter particles after the first quantum computation.

Optionally, the method may move or remove one or more traps for holding a matter particle after the first quantum computation.

Optionally, the method may remove, from their respective positions in the quantum computer, all of the first set of matter particles after the first quantum computation.

Optionally, the positioning a first set of the matter particles may comprise positioning a first matter particle in a first spatial position in the quantum computer; wherein the first spatial position is selected from a plurality of different potential spatial positions.

Optionally, the positioning a first set of the matter particles may comprise positioning a second matter particle in a second spatial position in the quantum computer that is different to the first spatial position; wherein the second spatial position is selected from a plurality of different potential spatial positions.

Optionally, the second spatial position is selected from a plurality of different potential spatial positions oriented along different directions from the first spatial position.

Optionally, the number of nodes of the plurality of nodes of the graph is greater than the number of nodes of the first subset of nodes of the plurality of nodes.

Optionally, the first spatial layout comprises a spatial layout of relative positions.

Optionally, the second spatial layout comprises a spatial layout of relative positions.

Optionally, the plurality of nodes of the graph are not associated with spatial positions prior to a determination of the first spatial layout.

Optionally, none of nodes of the second subset of nodes is in the first subset of nodes.

Optionally, any one of the nodes of the second subset of nodes is different to any of the nodes of the first subset of nodes.

Optionally, at least one node from the graph is different to any of the nodes in the first subset and second subset.

Optionally, the method may generate a first subgraph of the graph, the first subgraph comprising the first subset of nodes of the plurality of nodes.

Optionally, the first quantum computation encodes the first subgraph.

Optionally, the first spatial layout is associated with the first subgraph.

Optionally, the method may generate a second subgraph from the graph, the second subgraph comprising the second subset of the plurality of nodes.

Optionally, the second spatial layout is associated with the second subgraph.

Optionally, the second quantum computation encodes the second subgraph.

Optionally, the determination of the first spatial layout uses a greedy process.

Optionally, the determination of the second spatial layout uses a greedy process.

Optionally, the greedy process uses a greedy algorithm run on a classical computer.

Optionally, a determination of the second spatial layout comprises assigning at least one spatial position in the second spatial layout to a node using data associated with the graph.

Optionally, the method comprises determining the first and/or second spatial layout using a computer processor.

Optionally, the method comprises generating the first spatial layout.

Optionally, the method comprising generating a second spatial layout.

Optionally the method comprises generating the first and/or second spatial layout using a computer processor.

Optionally, the method comprises storing the first spatial layout in a memory.

Optionally, the method comprises storing the second spatial layout in a memory.

Optionally, the generation of the first spatial layout comprises assigning at least one spatial position in the layout to at least one node of the plurality of nodes.

Optionally, the first output set is an independent set of nodes.

Optionally, the second output set is an independent set of nodes.

Optionally, the determined set of one or more nodes comprises:

at least one node of the first output set; and,

at least one or more nodes of the second output set.

Optionally, the determined set of one or more nodes comprises:

the nodes of the first output set; and,

the nodes of the second output set.

Optionally, the determined set of one or more nodes comprises nodes of at least one independent set.

Optionally, the determined set of one or more nodes comprises:

at least one node of an independent set from the first output set; and,

at least one node of an independent set from the second output set.

Optionally the determined set of one or more nodes comprises:

all of the nodes of an independent set of the first output set; and,

all of the nodes of an independent set of the second output set.

Optionally, at least one matter particle used for the first quantum computation is unassigned to the plurality of nodes prior to the first quantum computation.

Optionally, all of the matter particles used for first quantum computation are unassigned to the plurality of nodes prior to the first quantum computation.

Optionally the first set of the matter particles comprising a different total number of matter particles than the second set of matter particles.

Optionally, the step of positioning the first set of matter particles comprises generating a first new register of matter particles.

Optionally, generating the first new register of matter particles comprises determining each position of each matter particle of the first set of matter particles according to the first layout.

Optionally, the step of positioning the second set of matter particles comprises generating a second new register of matter particles.

Optionally, generating the second new register of matter particles comprises determining each position of each matter particle of the second set of matter particles according to the second layout.

Optionally, the determination of the first spatial layout comprises selecting a spatial position for a matter particle based on the data associated with the at least one edge of the graph.

Optionally, the determination of the first spatial layout comprises:

selecting a first spatial position for a first matter particle; the first matter particle corresponding to a first node of the first subset;

selecting a second spatial position for a second matter particle; the second matter particle corresponding to a second node of the first subset that is different to the said first node; the second spatial position being a different position in the first spatial layout than the first spatial position; the selection of the second spatial position being based on the data associated with at least one edge of the graph.

Optionally, the selection of the second spatial position comprises checking conformity with the edges of the graph.

Optionally, the first and/or second spatial layout comprises a repeating pattern of positions.

Optionally at least two spatial positions of the first and/or second spatial layout are associated with an entanglement between two spatially separated matter particles.

Optionally, the method comprises:

selecting a first spatial position in the first layout for a first node of the graph;

selecting a second spatial position in the first layout for a second node of the graph; the first node being different to the second node; the second spatial position different to the first spatial position; the selection of the second node comprising selecting between at least the second spatial position and a third spatial position wherein the third spatial position is a different spatial position to the first and second spatial positions.

Optionally the second spatial position and third spatial position are oriented in different directions away from the first spatial position.

Optionally, the first and/or second spatial layout are generated based on an underlying lattice of possible spatial positions.

Optionally, the underlying lattice is triangle-based.

Optionally, the underlying lattice extends at least along one plane in the layout.

Optionally, to the first and/or second layouts are associated with a set of qubit positions.

Optionally, the underlying lattice comprises positional spacings determined by a unit disk.

Optionally the unit disk is determined at least partially by a Rydberg blockade radius.

Optionally, the unit disk is constant about the layout.

Optionally, the qubit positions in the first and/or second quantum computation are based on an input signal during the corresponding quantum computation that causes one qubit to entangle with another neighbouring qubit.

Optionally, the input signal comprises an Electromagnetic radiation.

Optionally, the plurality of nodes comprises a plurality of weighted nodes.

Optionally, at least one of the plurality of weighted nodes comprises a different weight to another different one of the weighted nodes.

Optionally, the plurality of edges comprises a plurality of weighted edges.

Optionally, at least one of the plurality of weighted edges comprises a different weight to another different one of the weighted edges.

Optionally, the plurality of nodes of the graph comprise negative weight values.

Optionally, the plurality of edges of the graph comprise positive weight values.

Optionally, the plurality of nodes of a first version of the graph comprise negative weight values.

Optionally, the plurality of edges of a first version the graph comprise positive weight values.

Optionally,

a) the plurality of nodes of the graph comprise one of:

negative weight values; or,

positive weight values;

b) the plurality of edges of the graph comprise the other one of

negative weight values; or,

positive weight values.

Optionally, the method determines the second subset of the plurality of nodes by modifying the weight of a node that is edge connected to a node of the first output set.

Optionally, the method determines the second subset of the plurality of nodes by modifying the associated weights of all the nodes that are edge connected to any of the nodes of the first output set.

Optionally, the method modifies the weight of any one or more nodes that are edge-connected to any of the nodes of the output set, using an edge weight.

Optionally, the edge weight used to modify a node comprises an edge weight of an edge connecting the said modified node to a node of the output set.

Optionally, the method modified the weight value of a node by adding or subtracting an edge weight value.

Optionally the method determines the second subset of the plurality of nodes by:

a) comparing a modified node weight to a threshold; and,

b) not including, second subset of the plurality of nodes, the node with the said modified node weight based on the comparison.

Optionally the threshold is a value of zero.

Optionally, the method does not include a node with a modified weight value if the modified weight value is above or below the threshold.

Optionally the method determines the second subset of the plurality of nodes by not including the one or more nodes of the output set in the second subset.

Optionally, the quantum computer comprises a neutral atom quantum computer.

Optionally, the matter particles comprise neutral atoms.

Optionally, a different matter particle represents a different qubit.

Optionally, a single different matter particle represents each qubit.

Optionally, the first spatial layout is associated with a first graph node-to-spatial position mapping.

Optionally, the first graph node-to-spatial position mapping is associated with the first subset of nodes.

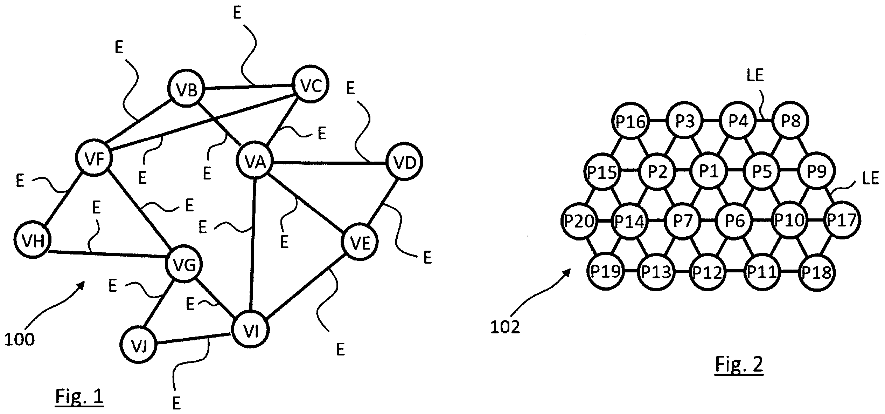

An example of this may be exemplified by referring to figure 2 where potential relative layout positions are labelled P1-P20 and a subset of five these layout positions [P1, P2, P3, P4, P5] are chosen for the first subset of nodes which correspondingly has five graph nodes V1, V2, V3, V4, V5 [not shown in the figures]. Each of the layout positions P1-5 is usable to position, in the same relative positional manner, five respective matter particles in the quantum computer. The choice of the layout positions of P1, P2, P3, P4, P5 are according to the first graph node-to-spatial position mapping wherein the spatial position P2, P3, P4, P5 are surrounding P1 in a hexagonal-like pattern.

Optionally, a further first spatial layout is associated with a second graph node-to-spatial position mapping.

Following on from the example above using P1-P5 as layout positions using a first graph node-to-spatial position mapping, the method may further compute one or more further spatial layouts using different mappings. These further spatial outs may use different layout positions. For example, the same graph nodes V1-V5 may be mapped to a different set of layout positions P1, P2, P3, P4, P8. The mapping of V1-5 to P1-4 and P8 is a second graph node-to-spatial position mapping. P1, P2, P3, P4, P8 may be a further spatial layout. The term further 'first' spatial layout may use the term 'first' to designate a potential layout usable to position the matter particles for the 'first' quantum computation. In another example a further mapping may use a different set of graph nodes to assign to a layout, for example nodes V1, V2, V4, V6, V8 instead of V1-5. A further mapping of different graph nodes may vary to include a total number of graph nodes that are any of: the same, more or less than the total number of graph nodes of a different mapping. The layout positions for a further mapping, with different graph nodes, may use the same spatial positions as another mapping, or different spatial positions to another mapping. For example, a further mapping may include nodes V1, V2, V4, V6, V8 and use P2, P7, P14, P13, P19 in the layout of figure 2.

Optionally the method further determines the further first spatial layout using a computer processor.

Optionally, the second mapping is associated with a further first subset of nodes.

Optionally, the first subset of nodes comprises a different set of nodes than the further first subset of nodes. In other words, there may be a plurality of different set of graph nodes used in different mappings and one of these mappings, hence one set of graph nodes, may be selected to be encoded by the first quantum computation.

Optionally, the first and second mappings are different mappings.

Optionally, the method may select the first mapping from the first and second mapping.

Optionally, the method may select the first mapping based on the number of nodes in the first mapping and second mapping.

Optionally, the method may perform a quantum computation for each of the respective spatial layouts for the first and second mappings.

Optionally, each said quantum computation outputs a respective first output set of one or more nodes.

Optionally, the method selects one of:

a) the first output set of one or more nodes for the first mapping;

b) the first output set of one or more nodes for the second mapping.

Optionally, the selected first output set is used to determine the second spatial layout.

Optionally, the method may perform:

a first quantum computation for the first mapping; the first quantum computation outputting a first resulting set of nodes;

a second quantum computation for the first mapping; the second quantum computation outputting a second resulting set of nodes; the second set of nodes being a different set of nodes to the nodes of the first resulting set.

Optionally, the method may:

use the first resulting set to position the matter particles for the second quantum computation;

use the second resulting set to position the matter particles for a further second quantum computation.

Associated with the first aspect, there is presented a system for determining a set of one or more objects representable by a respective set of one or more nodes of a graph; the system comprising a quantum computer;

the quantum computer using matter particles to represent a plurality of qubits;

the graph comprising:

a plurality of nodes;

a plurality of edges;

the system configured to:

position a first set of the matter particles in the quantum computer according to a first spatial layout, wherein a determination of the first spatial layout comprises assigning at least one spatial position in the layout to at least one node of the plurality of nodes using data associated with at least one edge of the graph; the first spatial layout associated with a first subset of nodes of the plurality of nodes;

perform a first quantum computation, using the quantum computer, using the first set of the matter particles spatially positioned according to the first spatial layout, the first quantum computation providing a first output set of one or more nodes;

position a second set of the matter particles in the quantum computer according to a second spatial layout; the second spatial layout associated with a second subset of the plurality of nodes wherein at least one graph node not in the second subset is:

a node of the first output set; or,

a node that is edge connected to a node of the first output set via a single edge connection;

perform a second quantum computation, using the quantum computer, using the second set of the matter particles spatially positioned according to the second spatial layout, the second quantum computation providing a second output set of one or more nodes;

determine the set of one or more objects at least from the second output set.

Optionally, the system may comprise a classical computer processor.

Optionally, classical computer processor may be configured to perform any of:

a) determination of the first spatial layout;
b) a determination of the second spatial layout;
c) determining the set of one or more nodes.

Brief description of the figures

Figure 1 shows an example of a graph;
Figure 2 shows an example of a layout of nodes;
Figure 3 shows an example of a register of atoms acting as qubits;
Figure 4 shows the graph of figure 1 with node removals;
Figure 5 shows a subgraph generated from the graph of figure 1;
Figure 6 shows a further example of a layout of nodes;
Figure 7 shows a further example of a register of atoms acting as qubits;
Figure 8 shows the graph of figure 1 with the solution to the problem;
Figure 9 shows an example of a weighted graph;
Figure 10 shows an example of the weighted graph for figure 9 with adapted node weights;
Figure 11 shows an example set-up of a neutral atom quantum computer.

Detailed description

There is now described an example of implementing a method for determining one or more data objects that may be representable by nodes of a graph. The data objects may be representable by a respective set of one or more nodes of a graph. The data objects may be representable by a graph in that a graph may not, in some examples be required to be calculated or stored other otherwise determined, but the objects are still in principle representable by a graph. A relationship between objects, for example between a pair of objects, may be representable by a graph edge, which may be directed, undirected, weighted or unweighted. Correspondingly, the objects may be represented by a graph. When represented by a graph the nodes and edges of the graph are determined, for example by using a classical computer processor. Accordingly, when represented by a graph, the method may be for determining one or more nodes of a graph.

Each data object may be representable by a different node of the graph. The data objects may be, for example, a variable in an optimisation problem such as, but not limited to: a Quadratic Unconstrained Binary Optimisation (QUBO); a High-order Unconstrained Binary Optimisation (HUBO); a Mixed Integer Linear Program (MILP). The variable may be a decision variable. At least one relationship between a pair of variables exists in the optimisation problem wherein the said relationship is representable by a graph edge, which may be directed, undirected, weighted or unweighted. For example, a QUBO or other optimisation problem may be generated for a problem not originating from a graph, such as the 'job-shop' problem. The representation of the problem may be via a graph, for example J. Blazewicz et al., in "The disjunctive graph machine representation of the job shop scheduling problem" Europe Journal of Operational Research, Vol. 127, Issue 2, December 2000 describes how the job-shop problem may be representable by a graph.

The following example may be implemented using a system. The features of this example may be adapted. The adaptions may come from any other example described herein. The features to be adapted may include, but are not limited to: the type of quantum computer used; the operation of the quantum computer; the type of graphs; the type of data that the graphs represent; the number of vertices of the graph; the number of edges; the type of edges; the number of nodes in a layout; the position of nodes in a layout. Furthermore, features described in this following example may be used to adapt other examples herein including but not limited to any of the above listed features.

A brief non-limiting summary of the method of this example is now described. Following this brief summary, the general operation of the method for this example is then discussed in detail, wherein such general operation features may be used with other examples herein. After this, the application of the methods' general operations to the example graph 100, of figure 1, are then discussed. It is to be understood that other examples of similar methods may be implemented that are different to this example, for example, examples based on a QUBO, which are discussed elsewhere herein.

As a brief summary, in this example method, a first group of two or more graph vertices (also called graph nodes), of an original graph, are assigned to a first group of two or more nodes in a spatial layout representing qubits, also referred to as a 'qubit layout'. The overall aim of the method may be to determine a solution to a problem applied to a set of data representable by the original graph. An example of a problem may be, but is not limited to, a maximal independent set (MIS).

The first group of graph nodes contains less nodes than the original graph. A first quantum computation is then executed on a quantum computer using qubits that are positioned relative to each other according to the qubit layout. The result of the quantum computation typically outputs one or more of the qubits as the solution that is then used to determine a subgraph of the original graph. The determination of this subgraph after the quantum computation is achieved by removing the graph nodes corresponding to the qubits of the solution, plus removing any further original graph nodes adjacently edge connected to those solution nodes. The subgraph may be thought of as the original graph modified to a further version containing less graph nodes that the initial original graph as a consequence of the said graph node removal.

A further process then occurs of assigning a further group of graph nodes, of the subgraph, to a further qubit layout. A further quantum computation is then executed on a quantum computer using qubits that are positioned relative to each other according to the further qubit layout. This further quantum computation occurs after the first quantum computation and may use the same quantum computing equipment or different quantum computing equipment. The results of the further quantum computation may be used to determine the solution to the problem and/or used to further modify the original graph via further graph node removal for further iterations of assigning remaining graph nodes to further qubit layouts. In this example, nodes are removed from the original graph (or a copy thereof) to generate subgraphs, however other implementations of the method may use original graphs having weighted edges wherein results of the quantum computation are used to adjust the weights of one or more of the original graph edges. Other variations of the method are discussed elsewhere herein.

The method may determine different subgraphs of the original graph. Different types of subgraph may be used. One type of subgraph is a graph from which a set of nodes are assigned to a layout position. This type of subgraph may be generated by removing nodes found by a previous quantum computation solution and potentially other edge connected nodes of that solution. A further assignment of graph nodes (from this subgraph) to different layout positions may then be determined. Some or all of the nodes of this subgraph be assigned to the new spatial layout used to position the qubits. This type of subgraph may also be referred to as a modified or different version of the original graph. Another type of subgraph is a graph made up of the nodes in a particular assignment step, together with the graph edges that connect them. This type of 'encoded' or 'encodable' subgraph is one that is encoded into a quantum computation. Thus, an encoded subgraph may be generated from a subgraph modified from the original graph.

The general operation of the method for this example is now discussed, in more detail. Figure 1 shows a graph 100 comprising a plurality of vertices VA-VJ, and a plurality of edges E. Vertices may also be referred to as 'nodes' of the graph 100. In this example there are ten graph nodes VA, VB, VC, VD, VE, VF, VG, VH, VI, VJ, however other numbers of nodes may be used. Each of the plurality of edges E connect a different pair of nodes of the graph 100. The edges E in this example shown in figure 1 are not variable weighted edges and simply represent whether an edge exists between two nodes by being present in the figure (taking a binary value of '1' in a corresponding edge data set) if an edge E is present and not being present if no edge E exists (taking a value of '0' in a corresponding edge data set). The graph 100 represents data of an adjacency matrix that displays the edge data set of the graph 100. By having binary edges, the adjacency matrix of the graph 100 is as follows in table 1, wherein only the upper right-hand diagonal is used to show the edges with a 1.

Table 1.

|    | VA | VB | VC | VD | VE | VF | VG | VH | VI | VJ |
|----|----|----|----|----|----|----|----|----|----|----|
| VA | -  | 1  | 1  | 1  | 1  | 0  | 0  | 0  | 1  | 0  |
| VB |    | -  | 1  | 0  | 0  | 1  | 0  | 0  | 0  | 0  |
| VC |    |    | -  | 0  | 0  | 1  | 0  | 0  | 0  | 0  |
| VD |    |    |    | -  | 1  | 0  | 0  | 0  | 0  | 0  |

(continued)

|    | VA | VB | VC | VD | VE | VF | VG | VH | VI | VJ |
|----|----|----|----|----|----|----|----|----|----|----|
| VE |    |    |    |    | -  | 0  | 0  | 0  | 1  | 0  |
| VF |    |    |    |    |    | -  | 1  | 1  | 0  | 0  |
| VG |    |    |    |    |    |    | -  | 1  | 1  | 1  |
| VH |    |    |    |    |    |    |    | -  | 0  | 0  |
| VI |    |    |    |    |    |    |    |    | -  | 1  |
| VJ |    |    |    |    |    |    |    |    |    | -  |

It is to be understood, generally, that the graph of figure 1 and other examples of graphs herein, may be representations of data such as an adjacency matrix. In other examples, any one or more of the edges E may take weighted values, for example: any real numbers; integers; positive real numbers. The edges E in figure 1 are represented by straight lines.

Figure 2 shows a layout 102 that is for representing qubits in a quantum computer. The layout 102 in this example is a two-dimensional layout, however one-dimensional or three-dimensional layouts may be used with this or any example herein. The layout 102 comprises a plurality of layout nodes that can each represent a qubit. In this example, there are 20 layout nodes, P1, P2, P3, P4, P5, P6, P7, P8, P9, P10, P11, P12, P13, P14, P15, P16, P17, P18, P19, P20, however other numbers of layout nodes may be used. In the forthcoming process of assigning a first subset of the graph nodes VA-VJ to layout nodes P1-20, a different layout node is assigned to a graph node in a sequential manner. The number of layout nodes may be greater than the number of initial graph nodes, at least for the first step of assigning graph nodes to layout nodes. Alternatively, the number of layout nodes may be less than the number of initial graph nodes, at least for the first step of assigning graph nodes to layout nodes.

Figure 2 also shows layout edges LE connecting the layout nodes P1-20. Only two layout edges 'LE' are labelled in figure 2, although it should be understood that each straight line connecting two layout nodes P1-20 in figure 2 is a layout edge LE. The layout edges LE represent the potential for qubit entangling in a future quantum computation where the elements for representing the qubits are spatially positioned relative to each other according to the layout 102. The presence of layout edges LE may depend upon several factors including but not limited to any of: the type of quantum computer; the type of element(s) used to represent the qubits; the relative positions of the elements representing the qubits; the input stimuli provided to the qubits during the quantum computation to perform the quantum computation. Such stimuli may be Electromagnetic (EM) radiation, but may be other input stimuli for different types of quantum computer. Properties of EM radiation that may be used to determine the presence of a layout edge, LE, may include but are not limited to: Rabi frequency, detuning, wavelength, amplitude, polarisation, duration of EM radiation applied to the qubits; variation or uniformity of EM radiation across the different qubits. In the layout 102 shown in figure 2, the presence of the layout edges LE and the layout node placements are assuming that all the elements are identical in type (e.g. the same neutral atom type) and that the computation is an analogue computation with the same EM radiation properties applied to all the qubits represented by the layout for the same time duration. It is to be understood that the element type may be varied within the same layout 102 and EM radiation (or other input stimuli) may be varied across the qubits.

The layout 102 is preferably a relative positional representation of qubits in a quantum computer. In other words, the layout may not represent actual positions but relative positions of the qubits in a particular pattern. The layout nodes P1-20 are shown in figure 2 as a regular repeated arrangement of finite extent in two dimensions. More particularly, the arrangement is a repeating lattice representing a triangular grid wherein a different layout node P1-20 is located at a vertex of the grid, i.e. at an apex of each triangle. Other grid types may be used such as a square grid or a hexagonal grid. Additionally, or alternatively, the full layout or a portion of the layout may use non-grid-like patterns, such as irregular layout node positions. Additionally, or alternatively, different portions of the layout may use different pattern types.

In this example the layout edges LE represent a potential for a Rydberg blockage between the two neutral atoms that the layout edge-connects, however other physical effects for entangling qubits may be used. Furthermore, the layout 102 also only shows layout edges LE connecting the nearest neighbour layout nodes P1-20 wherein each layout edge LE has the same length because of the positional layout of the layout nodes is upon an equilateral triangular lattice. In other implementations, the layout edges LE may not be identical, for example if a non-square rectangular lattice is used. The initial layout 102 of un-assigned layout nodes may be stored in a computer memory. The layout 102 of vertex-assigned layout nodes may be stored in a computer memory. The determination of which vertex corresponds to which layout node may be performed by a classical computer processor.

As described above, the method preferably performs a plurality of quantum computations wherein at least one of the quantum computations, preferably at least two of the quantum computations, are conducted on a spatial layout of elements (representing qubits) in the quantum computer. Such elements may be, for example neutral atoms. The spatial layout of the elements are mapped to a plurality of the nodes P1-P20 of a layout 102 that have been assigned to a graph vertex VA-VJ in a layout node assignment process. In other words, an assignment of a subset of the graph vertices VA-VJ to a corresponding set of layout nodes P1-P20 is performed and then the resulting 'vertex-assigned' nodes in the layout are replicated in physical form by the number and spatial positions of the elements in the quantum computer. The result of the subsequent quantum computation is used in determining a further layout of vertex assigned nodes, that in-turn is represented in a further quantum computation. Thus, where multiple quantum computations are performed, one quantum computation starts after the previous quantum computation finishes and the results of a previous quantum computation may affect the number and spatial layout of qubit-elements in one or more further quantum computations.

The qubits that are to be used in a quantum computation may already be held in such relative positions before or during the assignment of graph nodes to layout nodes. In such a circumstance, the qubits are initially unassigned to any of the graph nodes. Alternatively, the quantum computer may not be set up, prior to the assignment step, to hold or otherwise maintain any qubits in the positions according to the layout.

The elements representing the qubit are preferably matter elements such as matter particles or structures. Matter particles may be, for example, ions or neutral atoms. Structures may be electronic elements such as superconducting qubits. For purposes of this example, the quantum computer is a neutral atom quantum computer, for example holding individual Rubidium atoms as the qubits in an array of optical traps. Details of an example neutral atom quantum computer usable are presented elsewhere herein.

An example of the layout node-vertex assignment process is now described underneath. It should be understood that other assignment processes and assignment rules or considerations may be used.

As described above, the method may perform a first process of assigning a subset of the graph vertices (graph nodes) to the layout nodes. The subset of graph nodes comprises fewer graph nodes than the original graph 100. At first, an initial one of the graph nodes VA-VJ is chosen for assignment. This choice may be random and/or may be decided according to one or more conditions or rules such as being a graph node with a maximal number of edges connected to it. Once this graph node is selected, it is assigned to one of the layout nodes P1-P20. Again, this may be done using a random assignment and/or using one or more conditions or rules. An example of a rule may be to only accept the assignment of the first layout node to a layout node that allows for a maximum number of other layout nodes to be assigned to it. An example of this would be choosing layout node P6 over P19 because P6 allows for six other layout nodes to be assigned and edge-connected to it, compared to only three other connectable layout nodes for P19. In another implementation the layout node may be selected before the initial graph node is selected, in other words, the graph node is assigned to the preselected layout node.

Once an initial graph node has been assigned to a layout node, the method then begins a process of sequentially assigning further unassigned graph nodes VA-VJ to unassigned layout nodes P1-20. This is done generally by assigning a currently unassigned layout node (also referred to as a candidate node) to a currently unassigned graph node that is edge connected in the graph to a previously assigned graph node. This assignment is made under one or more conditions. One condition may be that any of the layout edges directly connecting the candidate layout node to a pre-assigned layout node corresponds to an edge E of the graph connecting the corresponding vertices. In other words, the assignment of the vertices to layout nodes gives rise to a correct assignment of layout edges LE to graph edges. An example to illustrate this is as follows. If P10 is already assigned to VA; and P17 is already assigned to VD; then the assignment of VC to P9 would violate this rule. The reason for this violation is that although VA and VC share a graph edge and P10 and P9 share a layout edge; P17 and P9 share a layout edge LE but VC and VD do not share a graph edge E. Thus, the edges in the layout 102 would not represent the edges in the graph 100. However again, if P10 is already assigned to VA; and P17 is already assigned to VD; the assignment of P5 to VC would not violate this rule and the assignment would be a valid one. The reason for this valid assignment of VC to P5 is because: P5 is layout edge-connected to P10, which correctly corresponds to VC being graph edge-connected to VA; P5 is not layout edge-connected to P17 which correctly corresponds to VC not being graph edge-connected to VD.

It should be understood that the process of assigning graph nodes to layout nodes may be done in different ways and may result in different graph node to layout node mappings. One example method may use a greedy algorithm to assign nodes, another may be to use a method that finds a Clique in the modular product of the graph and a graph representing the layout nodes. The process of assigning graph node to layout node may be done in different ways including: implementing a process on a classical electronic computer for the steps above or having a user perform the assignment. The assignment process may randomly select an unassigned graph node to be assigned. The assignment process may select the graph node according to one or more rules. Examples of rules may be any of but not limited to: selecting an unassigned graph node from a plurality of unassigned graph nodes based on the number of graph edges the selected graph node has to other assigned graph nodes (for example selecting the unassigned graph nodes with the maximum number of edges); selecting an unassigned graph node from a plurality of unassigned graph nodes based on whether it is graph edge connected to a particular assigned graph node.

The assignment process may be executed in a 'greedy' manner, for example using a 'greedy algorithm'. When a greedy process or greedy algorithm is used an optimum (best) option is selected based on current information. There may be several options of layout nodes that would be candidates for assignment under such a greedy process, in which case the choice between such nodes may be random, or selected according to another rule. The method may either randomly select a layout node and then determine if the layout node accords to the greedy process, or the method may determine all of the available assignable layout nodes and then select one of them randomly (or according to another rule).

The assignment process may preferably continue until no further valid assignment of nodes. Alternatively other assignment stopping criteria may be used such as continuing to validly assign graph nodes to layout nodes until a predetermine number of graph nodes have been assigned to layout nodes; or a time limited has expired.

The set-up of the quantum computation may be achieved in different ways. A preferred way is to generate the final layout to be implemented in a quantum computer and then set up the quantum computer ready for the quantum computation. Another example is to set up the quantum computer ready for the quantum computation whilst the layout is being generated. An example of the latter would be to position a qubit element for each layout node after each layout node has been validly assigned.

The set-up of the quantum computer may already be at least partially completed during or before the layout 102 is determined. Underneath, is described a preferred process of setting up the quantum computer after the layout is determined. This example assumes a neutral atom quantum computer is used, however other quantum computers such as a trapped ion quantum computer may be used and may use a similar set-up method.

A set of spatially separated traps are formed in the quantum computers region of space for accommodating its qubit elements, for example a region of a vacuum chamber. Neutral atoms such as Rubidium are introduced into the vacuum chamber either before or after the traps are formed. The traps are preferably optical traps and may be magneto-optical traps. At least a plurality of the traps are positioned relative to each other such that they spatially correspond to the arrangement of assigned layout nodes in the final layout. The traps assigned to the layout nodes are referred to as the layout traps in this description. Typically, the traps may already be trapping an atom wherein some traps may not trap an atom. One or more optical tweezers, or other atom-moving techniques and associated apparatus, are then used to fill each of the layout traps with one neutral atom. Other neutral atoms not in the layout traps are removed from being interactable with the neutral atoms in the layout traps. This removal may be done by any of, but not limited to: a) turning off all other non-layout traps and evacuating all other non-trapped atoms; b) moving trapped neutral atoms, or otherwise ensuring that all other trapped neutral atoms are located in traps that are far away from the layout traps and thus will not interact (with a Rydberg blockade) with the neutral atoms in the layout traps. The determination as to whether a layout trap is successfully trapping a neutral atom may be determined by using a detector such as a camera. The camera may be detecting a specific wavelength of light such as a fluorescence spectrum indicating the presence of a trapped atom.

The spatial positions of the layout traps correspond to the layout node positions taking into account the Rydberg blockade effect (or other entangling effect for other quantum computers) of the forthcoming input EM radiation of the quantum computation that is incident upon the neutral atoms in the layout traps. For instance, for one particular set of values for the Rabi frequency and detuning of the EM radiation, the trapped atoms may be spaced apart by a different magnitude to a different set of values for the Rabi frequency and detuning of the EM radiation.

Once the quantum computer is set up, one or more pulses of EM radiation is input into atoms trapped in the layout traps. This may be executed by an electronic computer outputting an electronic control signal to one or more EM radiation sources such as a laser. The one or more EM radiation sources may impart the same or different EM radiation to the different neutral atoms in the layout traps. Typically, the same EM radiation is imparted to all the neutral atoms. The 'same' EM radiation here meaning EM radiation having the same parameters such as duration, amplitude, wavelength, polarisation; for example, originating from the same EM source.

After the EM radiation has stopped being input to the neutral atoms, the states of the neutral atoms may then be measured. In the quantum computation, the neutral atoms have one energy state for representing the |0> measured qubit state, and different energy state for representing the |1> measured qubit state. These two different states may be referred to as basis states. An example of the energy levels may two different hyperfine energy levels, preferably the hyperfine levels of the same total electronic orbital angular momentum. Other different energy levels may be used. The measurement of which neutral atoms are in which basis state may be determined by monitoring the EM radiation emitted from each neural atom. Depending on the energy levels used to represent the |0> and |1> state, the states may be differentiated by any of: one state emitting EM radiation whilst the other state not emitting radiation, wherein an example radiation emitted is via a fluorescence process; each neutral atom emitting EM radiation but the radiation of atoms of one basis state comprises at least one parameter that is different to the atoms in the other basis state, wherein an example of a parameter is wavelength.

There now follows a detailed example as to how the method may be used with the graph 100 of figure 1. This example represents one implementation of the method wherein features described for this example may be used with other examples herein, furthermore this example may be adapted with other features from other examples. This example starts by using a classical electronic computer to determine the assignment of graph nodes to layout nodes. The classical computer uses an algorithm to determine the assignment. The algorithm is stored on a computer memory.

In this example, the method goes through two assignment processes to solve a problem associated with the graph 100. Each assignment process is followed by a quantum computation on a neutral atom quantum computer wherein neutral atoms are positioned according the assigned node layout.

For the first assignment VA is provisionally assigned to P1. There is no edge data to compare this first node, therefore the assignment is allowed. VB is then provisionally assigned to P3. Edge data between the current provisional assignment and previously assigned nodes shows VA and VB share an edge. This edge is provided for in the layout as P1 and P3 share an edge. The assignment for P3 to VB is therefore allowed. It should be understood that in this example, provisional assignments of graph nodes to layout nodes is used, however, in other implementations of the method, the method may determine all valid candidates, then rank them, then chose the best one. For example, the ranking may use one or a plurality of criteria. One example of a criteria is comparing the degree of the graph node to the degree of the layout node and prioritising the graph node with the average degree of a node of the layout.

VC is then provisionally assigned to P4. Edge data between the current provisional assignment and previously assigned nodes shows: VA and VB share an edge; VA and VC share an edge; VB and VC share an edge. These edges are provided for in the layout as P1 and P3 share an edge; P3 and P4 share an edge; P1 and P4 share an edge. The assignment for P4 to VC is therefore allowed.

VD is then provisionally assigned to P5. Edge data between the current provisional assignment and previously assigned nodes shows VA and VD share an edge. P5 shares an edge with P4 in the layout. However, since VD does not share an edge with VC (already assigned to P4), VD cannot be assigned to P5. A further layout position is then searched for to assign to VD.

VD is then provisionally assigned to P6. Edge data between the current provisional assignment and previously assigned nodes shows VA and VD share an edge. P6 shares an edge with P1, P5, P10, P11, P12, P7. The only assign position in this list is P1 which is already assigned to VA. Thus, the edge VA-VD is mapped correctly with this assignment wherein the assignment does not contravene edge data in the initial graph 100. The assignment for P6 to VD is therefore allowed.

VE is then provisionally assigned to P7. Edge data between the current provisional assignment and previously assigned nodes shows VA and VD share an edge; VA and VE share an edge. For other assigned nodes VB and VC, the assigned positions do not share an edge with P7. The assignment for VE to P7 is therefore allowed.

VI is provisionally assigned to P2. Since P3 is already assigned to VB; and P2 shares an edge with P3 but VB does not share an edge with VI, this provisional assignment is not allowed. Furthermore, VI cannot be correctly assigned to P5 because P5 shares an edge with P4, P4 is already assigned to node VC, however VC is not directly edge connected to VI.

Next, the other untested nodes connected to the assigned nodes of the graph 100 are checked to see if they can be correctly assigned to a position in the layout.

The assigned nodes so far are VA, VB, VC, VD, VE. The assigned positions are P1, P3, P4, P6, P7.

The method now determines whether any unassigned nodes in the graph 100, that are adjacent (connected via one edge) to an assigned node, can be mapped correctly onto the layout.

The only unassigned node directly connected by one edge to an assigned node and has also not previously been assessed for assigning, is VF. The method executes a similar checking assignment procedure as before.

VF is provisionally assigned to P2. Since P1 is assigned to VA; P1 and P2 share an edge but VA and VF do not share an edge, P2 cannot be assigned to VF.

VF cannot be assigned to any of P5, P8, P9, P10, P11, P12, P13, P14, P15, P17, P18, P19, P20 because VF shares an edge with VB; and VB is assigned to P3; and P3 is not edge connected to any of these listed positions.

VF is provisionally assigned to P16. P16 shares an edge with P3 which correctly maps the edge VB-VF. However, VF also shares an edge with VC, VC is assigned to P4; P4 does not share an edge with P16, thus P16 cannot be assigned to VF.

No other unassigned nodes in the initial graph 100 can be assigned to unassigned positions in the layout 102.

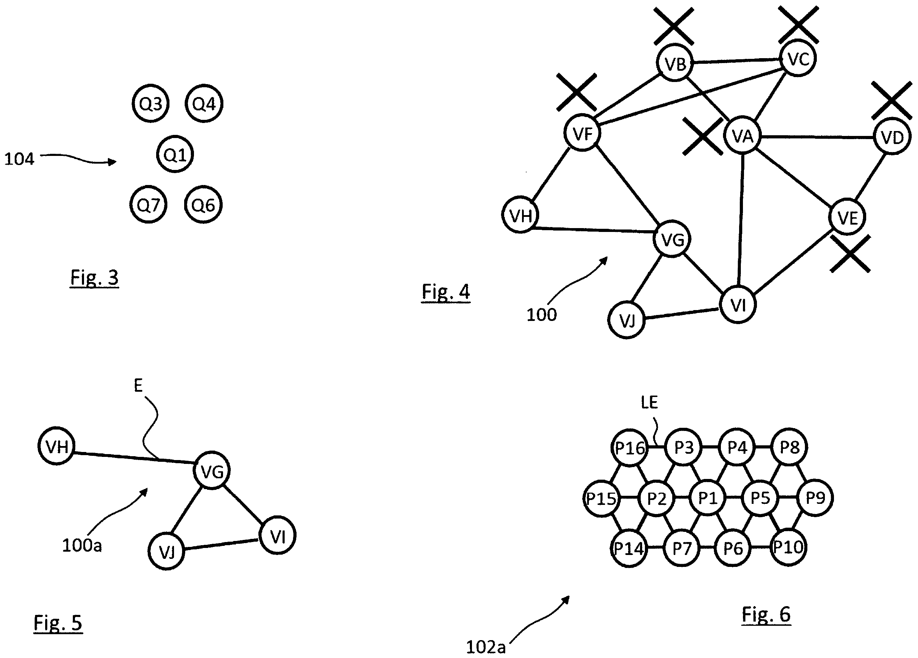

A register 104 of neutral atoms is set up with five atoms wherein layout positions P1, P3, P4, P6 and P7 are directly embedded into the neutral atom register 104. Figure 3 shows the neutral atoms Q1, Q3, Q4, Q6, Q7 in the relative spatial arrangement they occupy in the quantum computer. In this example the qubit-atoms are arranged about a single 2D plane in the quantum computer chamber, however other arrangements may be used that correspond to the layout 102. The labels Q1, Q3, Q4, Q6, Q7 are chosen in figure 3 for illustrative purposes to represent a mapping of the same spatial arrangement as the layout 102 wherein layout positions P1, P3, P4, P6 and P7 have been selected. In other words, a qubit-atom representing a particular graph node is positioned relative to other qubit-atoms representing other graph nodes in accordance with the same positional arrangement as the layout 102.

The quantum computer is then set-up to perform a quantum computation using the register 104 of qubit-atoms. The relative positional arrangement of the qubit atoms is according to the relative positional arrangement of the layout nodes P1, P3, P4, P6, P7. The absolute distance between the qubit atoms Q1, Q3, Q4, Q6, Q7 is determined at least using one or more values of parameters of the EM radiation to be input to the qubit-atoms during the quantum computation. The one or more parameter values may be, but are not limited to values of Rabi frequency, wavelength detuning. A Rydberg blockade radius may be calculated using the one or more of the values. In more detail, for a computation using a Neutral atom quantum computer, Electro-Magnetic (EM) radiation of the same amplitude and wavelength may be globally imparted upon all the qubit atoms during the quantum computation to facilitate changes in energy levels. Atoms transitioned to a Rydberg energy state using the EM radiation can prevent neighbouring atoms from being promoted to the same energy state using the Rydberg blockade and hence entangle the atoms. When determining whether another atom is suppressed from transitioning to a Rydberg energy level, the Rydberg blockade radius $R_b$ is used as shown in equation 2. In equation 1 $C_6$ is a constant depending on the Rydberg level, $\Omega$ is the Rabi frequency, which is determined by the amplitude of the EM radiation, and $\hbar$ is the reduced Planck's constant (h/2π).

$$R_b = \left(\frac{C_6}{\hbar\Omega}\right)^{1/6}$$

[Equ. 2]

For two qubit atoms that correspond to two layout nodes VA-VJ sharing a layout edge LE, the absolute distance between two qubit-atoms may be determined at least partially using the Rydberg blockade radius. This may be, but is not limited to, the adjacent qubit atoms comprising a distance less than or equal to the Rydberg blockade radius. Furthermore, for two qubit atoms that correspond to two layout nodes VA-VJ that do not share a layout edge LE (i.e. are non-edge-connected), the absolute distance between the said two qubit-atoms may be determined at least partially using the Rydberg blockade radius. This may be, but is not limited to, the adjacent qubit atoms comprising a distance greater than the Rydberg blockade radius.

The resulting quantum computation using the neutral atom quantum computer then outputs an independent set of Q6 and Q3, which relate to layout positions P6 and P3 respectively, hence nodes VD and VB respectively. It should be noted what whilst only two qubits Q3 and Q6 are output as the solution of the quantum computation in this worked example, the same computation may have yielded a different set of one or more qubits. Furthermore, in general, for other quantum computations of this method, a quantum computation may yield any of: no qubit-atoms as a solution, one or more qubit atoms as a solution; a plurality of qubit atoms as a solution.

For a neutral atom quantum computer, and optionally for other quantum computers usable by the method, the output may be any of a maximal or maximum independent set of the graph. This may be as a result of the set-up of the quantum computer wherein for a given graph node and its corresponding given qubit-atom, all graph nodes that share an edge with the given graph node are represented by qubit atoms that are close enough to be affected by the Rydberg blockade should the given atom be excited to a Rydberg state.

Returning to the present worked example. The method then generates a further graph 100a by removing:

   a) The nodes in the independent set
   b) The neighbouring (single edge) connected nodes of the nodes in the independent set.

The nodes that corresponded to the independent set in this example are VB and VD as described above. The adjacently connected nodes to VB and VD are: VA, VC, VE and VF. Thus, the method removes VA, VB, VC, VD, VE and VF to generate a new subgraph 100a from the original graph. This subgraph is modified version of the initial graph 100. This graph node removal is shown in figure 4 wherein the original graph 100 is shown with cross symbols 'X' next to the graph nodes selected for being ignored for purposes of assigning a further set of layout nodes to subgraph nodes. The remaining undeleted nodes VG, VH, VI, VJ, of the original graph 100 and the edges that connect these remaining nodes from the initial graph 100 form a new subgraph 100a as shown in figure 5.

In an adaption of this example, and other examples herein, the step of generating a new subgraph 100a may be dispensed with and the method may use a different process to enable further graph node to layout node assignments. For example, in addition to, or in the alternative, the method may store a list of all graph nodes to be not considered in further node assignments. In another example the method may adapt the original graph 100 to remove these identified nodes, as opposed to generating a subgraph. An example of this may be that the original graph is stored in a memory and then modified according to the output of a quantum computation as described elsewhere herein. In another alternative, the method may keep a list of current graph nodes that may be used in the assignment process and update this list each time graph nodes are identified by the quantum computation.

A new layout 102a is generated as shown in figure 6. The new layout comprises layout nodes P1-P16. This layout 102a has the same lattice-like pattern as the previous layout 102 but has less layout nodes. The new layout may have the same number of layout nodes as another layout or a different number of layout nodes. Furthermore, the spatial pattern of the layout nodes may be the same as or different to other layouts used in the method. A reduction in layout nodes may occur because the classical computer determined that the number of graph nodes is small enough to warrant a smaller layout. Methods of preparing a layout may be similar to other layouts described elsewhere herein.

A further graph-node to layout node assignment process is then undertaken by the classical computer. The second assignment process in this worked example is now described. VG is initially assigned to P1. P6 is then assigned to VI correctly. P7 is then assigned to VJ correctly. VH is then provisionally assigned to P2, but cannot be correctly assigned according to graph edge data because P2 shares an edge with pre-assigned P7 but VJ does not share an edge with VH. The method then tries P3 as a provisional assignment for VH and this maps correctly.

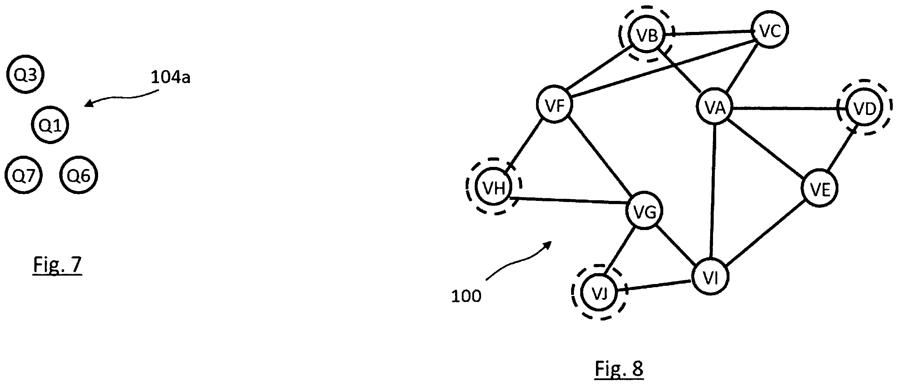

A second register 104a of neutral atoms is set up, as shown in figure 7, with four atoms wherein layout positions P1, P3, P6 and P7 are directly embedded into the neutral atom register 104a with corresponding qubit atoms Q1, Q3, Q7, Q6. As before, the relative positional arrangement of the qubit atoms maps to the relative positional arrangement of the node-assigned layout positions. The resulting quantum computation outputs an independent set of Q7 and Q3, which relate to layout positions P7 and P3 respectively, hence nodes VJ and VH respectively.

The method then stops generating new graphs and new layouts and stops requiring further quantum computations because all nodes in the original graph 100 have been either been: assigned and represented in a quantum computation; or, removed from the graph after the finding of an independent set.

The output of the method, in this worked example, is the sum of the nodes represented by all the independent sets found. Thus, VD, VB, VJ, VH are the outputs from this example of the method. The output in this example is a solution to the MIS problem of the initial graph. However, by using the method herein, the determination of the solution to the problem has used a plurality of quantum computations wherein the result of one quantum computation has affected the encoding of the graph nodes into a subsequent quantum computation. In this example, the full output set of nodes also forms an independent set of the initial graph 100 as shown in figure 8 wherein the nodes of the independent set are surrounded by a dashed circular line.

The solution presented in figure 8 is the solution to an MIS problem applied to the initial graph 100. The problem is encoded into the quantum computation by virtue of the qubit atom positions and the parameters of the EM radiation used to drive the qubits in the quantum computation. Other problems may be used with the method.

Unlike prior methods where a single quantum computation is made for the entire initial graph, the above worked example of the method has performed multiple quantum computations. In each of the multiple quantum computations, the total number of qubit-atoms used is less than the total number of atoms used for a quantum computation encoding all of the graph nodes. Furthermore, the total number of qubit atoms used between the multiple quantum computations, for representing the graph nodes, is also less than the total number of atoms used for a quantum computation encoding all of the graph nodes. For the above worked example, the first quantum computation used five qubit-atoms whilst the second quantum computation used four qubit atoms. The total number of qubit atoms representing graph nodes is therefore nine, whereas the total number of graph nodes in the original graph 100 is ten. The paper "Solving optimization problems with Rydberg analog quantum computers: Realistic requirements for quantum advantage using noisy simulation and classical benchmarks" by M. Serret et al., arXiv: 2006.11190v3, does not assign graph nodes to a layout and then use that layout to determine where to relatively position qubits.

Optional variations to the method

The above examples provide some optional variations. Underneath are further examples for adapting the example methods herein.

The determination of a further graph for use in assigning graph nodes to layout nodes may be varied. In the example described above a subgraph may be created based on the previous graph and the graph nodes corresponding to the qubits output as a solution to a previous quantum computation.

In general, there may be a set of vertex and edge data that may be representable by a graph. This set of data may be generated from a previous graph and the graph nodes of the previous graph corresponding to the qubits output as a solution to a previous quantum computation of the previous graph. The previous graph may be an original graph to which a problem is sought to be applied to. Alternatively, the method may be applied to a subgraph of an original graph. The original problem may be used to encode any of the subgraphs that are run on the quantum computer. For example, each encoded subgraph is encoded according to an MIS problem (or other problem). The encoding may use a computer processor to determine a Hamiltonian. A QUBO may be determined from a Hamiltonian. The QUBO may be used to set-up the quantum computer.

The method may perform one or more or a plurality of quantum computations to determine a solution set of one of more graph nodes. For example, a plurality of quantum computations may be executed yielding a plurality of solution sets. Potentially at least two solution sets may be different. The method may select a solution set from a plurality of different solution sets. The selection may be based on a rule, threshold, a comparison, or another measure of set of one or more conditions. An example of conditions may be any of, but not limited to: selecting the solution set with the greatest number of nodes; selecting the solution set with the least number of nodes; selecting the solution set with the node that have the greatest number of edges connecting them; selecting the solution set with the node that have the greatest number of edges connecting them; selecting the solution set with the node that have the least number of edges connecting them.

The one or more of the output graph nodes from a quantum computation, which may form at least part of a solution set (for example of an independent set) may be ignored and not count towards the output nodes used for: the solution to the problem and/or the nodes used to determine further layouts of qubit elements. This may be accomplished by removing at least one node of the solution set, but leaving at least one node of the solution set. In the generation of a further subgraph (modified version of the original graph) for a further assignment process, the method may delete from the previous graph these solution-identified nodes, and optionally their neighbouring edge-connected nodes. A further alternative is that all nodes of a solution set are not considered further (i.e. the solution set is ignored) and the quantum computation is run again to find a different solution to use in further method steps. For example, one quantum computation solution may be analysed and determined that it is not a good solution and the quantum computation is re-run.

The layout structure or pattern may change for different layout. The layout may be any of, but not limited to: an irregular lattice; a regular lattice of a different structure, such as positions on a square grid; a lattice in 3D not just 2D.

The quantum computation can use different EM radiation on different atoms. The different EM radiation may be different by being generated by a different EM source. The different EM radiation may have the same or different parameters such as any of, but not limited to: amplitude, wavelength, polarisation.

Edge weights and/or graph node weights can be used. For example, weights may be used to try to minimise graph nodes that are connected to large numbers of other nodes, to a node that gets removed after finding a set. For example, an unweighted independent set. This can be done by potentially positioning the atom (or atoms) acting as that (those) qubit in a position that gets affected differently by the Rydberg blockade. Additionally, or alternatively, a different EM radiation may be applied to that qubit atom compared to other qubit atoms, for example EM radiation having a different amplitude or wavelength. Additionally, or alternatively the trap may be maintained as 'on' during the computation to prevent that atom from being promoted to the Rydberg energy levels.

The example above, and other examples herein, also uses a greedy approach, however a non-greedy approach may be used. For example, the assignment process may not seek to assign as many graph nodes to layout nodes as it can. Instead, the assignment process may assign a number of graph nodes according to one or more threshold values. This threshold value may be a maximum number and/or minimum number of graph nodes; or a number of graph nodes in between these two example thresholds. A maximum threshold may be set by the qubit capacity of the quantum computer.

Steps performed by a classical computer may be any of, but not limited to: a) storing in a memory any of: the problem, an original graph, a subgraph; values for EM radiation for the quantum computation; values calculated for the quantum computation such as values for implementing a Hamiltonian; positional values of qubit-elements; values associated with solutions from a quantum computation, algorithms for performing processes and method described herein; b) using a classical computer processor to determine any of: a subgraph, graph-node to layout node assignments; positions of qubit-elements and hence any associated trap positions in the quantum computer; checking whether a quantum computed solution of one or more graph nodes is to be used for further assignment processes; determining whether to stop the method; determining whether a solution to the problem is achieved; c) outputting electronic signals such as but not limited to: signals for controlling a quantum computation such as, but not limited to: controlling equipment for positioning qubit elements; controlling equipment for generating and directing EM radiation for driving the qubit-elements in the quantum computation.

QUBO example

As described above, the method may be applied to data sets wherein the edge values linking graph nodes are not limited to the binary values of 0 and 1. There now follows an example whereby the initial data set represents data values for a Quadratic Unconstrained Binary Optimisation (QUBO) problem. The features described for this example may be applied to other examples herein and it is to be understood that the following method may also be used for other optimisation problems other than MIS, such as other combinatorial optimisation problems.

The following example may be implemented using a system. The features of this example may be adapted. The adaptions may come from any other example described herein. The features to be adapted may include, but are not limited to: the type of quantum computer used; the operation of the quantum computer; the type of graphs; the type of data that the graphs represent; the number of vertices of the graph; the number of edges; the type of edges; the number of nodes in a layout; the position of nodes in a layout; the process of assignment; the process of creating a subgraph based on the results of a quantum computation. Furthermore, features described in this following example may be used to adapt other examples herein including but not limited to any of the above listed features.

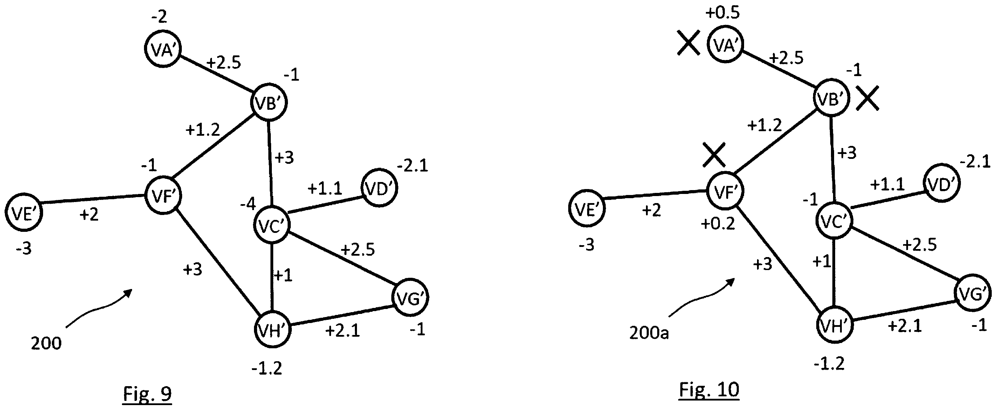

A non-limiting brief summary of the method of this example is now described before the method is described in detail with respect to figures 9 and 10. Following this brief summary, the operation of the method is then discussed in detail with respect to the figures wherein features may be used with other examples herein. It is to be understood that other examples of similar methods may be implemented that are different to this example.

As a brief summary, in this example method, the method starts with an initial data set representable by an adjacency matrix. In particular for this example, the data set may be for a QUBO problem. The adjacency matric may be expressed as a graph with nodes and edges. The adjacency matrix in this example has weights for the nodes and weights for the edges. Each node has an associated weight. Each edge has an associated weight. These weights may be real numbers. The method operates in a similar way as discussed in other examples herein, thus teachings from those other examples may be applied here. Like other examples, the method starts with an initial set of data to which a problem is applied to, such as, an MIS problem applied to the data set. The method assigns a first subset of the data set nodes to layout nodes as described for other examples elsewhere herein, a different one layout node to a different one data set node. A quantum computation is then run wherein elements representing the qubits are positioned relative to each other according to the layout. The quantum computer outputs one or more of the qubit elements, which, in turn, are mapped back to the corresponding graph node(s) as a solution. The original data set nodes that were assigned to the layout nodes of the quantum computing output solution are then used to determine a remaining set of data set nodes that are to be assigned to one or more further layouts. The further layout(s) is then implemented again on a further quantum computation.

Unlike other examples herein, this example method uses a different process to assign data set nodes to layout nodes. Other portions of the method, for instance in other examples above for performing the quantum computation and determining a final set of the graph nodes or objects represented by the graph nodes, may apply here. Furthermore, the other methods above may be adapted to use the feature of this 'weighted' node and edge example. Furthermore, it uses a different process to determine which data set nodes are considered for a subsequent layout mode assignment. In other words which data set nodes, after a quantum computation, are removed from the previous version of the data set to leave a subset of the data set nodes to be candidate data set nodes for assignment to layout nodes. As a brief non-limiting summary, the assignment of data set nodes to layout nodes for applying to the qubits is achieved by determining multiple mappings between data set nodes and layout nodes, thus forming multiple respective candidate layouts. One of the candidate layouts is then selected from all the candidate layouts, based on one or more criterion. Preferably the criterion includes a measure of how close the data nodes in the layout positions, hence the layouts' depiction of the edges connecting the assigned nodes, reflect the same nodes and edges in the original data set. This criterion may be implemented in different ways, include those detailed underneath.

As discussed above, this example method uses a different process to determine which data set nodes are considered for a subsequent layout mode assignment. When a layout node is presented as an output of a previous quantum computation, the associated assigned data set node is determined from the previous layout assignment. The method then deselects original graph nodes to create a subset of the original graph nodes to use for a further assignment process. The deselection process may deselect original data set nodes in at least two ways. Firstly, deselecting the data set nodes that correspond to the output solutions qubits of the previous quantum computation. Secondly, by: a) changing the weights of the data set nodes adjacently edge-connected to the data set nodes of the quantum computation; b) using a criteria to determine whether the resulting node weights of at least the weight-adapted nodes allow for such nodes to remain in the data set for further data set node assignment.

Process a) above, may be accomplished in different ways including, but not limited to, modifying the weight of the connected node by the weight value of the connecting edge. This may be, for example: adding or subtracting the edge weight to the connected node; or multiplying or dividing the weight of the connected node by the connecting edge weight. Process b) above may be accomplished in different ways including, but not limited to, comparing at least the weight adapted nodes, preferably all the remaining data set nodes, to a threshold criteria, and removing the nodes, for further layout assignment that do not satisfy the threshold criteria.

The above is now discussed with a simple example where: initial node weights are negative values; edges are positive values; the edge weights are added to node weights in process a) above; the threshold criteria in process b) above, is that any node weight that is adapted to become a positive value is excluded from further layout node assignment steps; the initial data set has nodes A-H; nodes A, B and C were initially assigned to a layout that was run on a quantum computer. Node B was the solution of that quantum computation.

Figure 9 shows a graph 200 depicting the graph nodes in this example. The graph nodes A-H are represented by VA'-VH' in the graph 200. Node weights are shown next to the graph nodes. Graph Edges are shown in straight lines connecting a pair of nodes, with edge weights shown next to the associated edge.

Node B in the original data set is directly and adjacently connected by a respective single edge to nodes A, C and F. Node A has initial node weight of -2, node C has initial node weight of -4; node F has initial node weight of -1. The edge connecting node B to node A has weight 2.5. The edge connecting node B to node C has weight 3. The edge connecting node B to node F has weight 1.2.

Figure 10 shows the graph 200 of figure 9 modified to a modified graph 200a by adapting node weights and determining graph nodes not to be used in the next layout assignment process. When adapting the node weights: node A is changed to a weight of 0.5 (via -2 +2.5); node C is changed to a weight of -1 (via -4 +3); node F is changed to a weight of 0.2 (via -1 +1.2). Nodes A and F of the data set are removed from further steps of assigning data set nodes to a further new layout. This is shown by a 'X' positioned next to the said nodes. These nodes are removed because their node adapted node weight was a value above '0', hence a positive value.

Node C still has a negative weight in figure 10, after adaption, and therefore may still be used in a further dataset-node to layout-node assignment step. Node B is also removed from further steps of assigning data set nodes to a further new layout. This is also shown by a cross 'X' next to the node. This removal is because it was a solution to the quantum computation. As a result, the next step of assigning data set nodes to layout nodes only uses data set nodes C, D, E, G, H, because data set nodes A, B and F have been removed from consideration.

In the above discussed example, only one data set node was found in the quantum computation. Where multiple data set nodes are output as solutions to the quantum computation, each of the directly edge connected nodes to each of the solution nodes has its node-weight adapted. This may result in a non-solution node being adapted multiple times if the said node is directly edge connected to multiple solution nodes. For instance, suppose in the above example that nodes F and C were found as the solutions from the quantum computation rather than node B. Node H is edge connected to node C by an edge value of +1. Node H is also edge connected to node F by an edge value of +3. Node H would have its weight adapted by adding both of the edge weights of edges C-H and F-H. Thus, node H would have its previous node weight of -1.2, adapted to add +1 (from edge C-H) and +3 (from edge F-H). Node H would therefore result to comprise a node weight of -1.2 + 1 + 3 = +2.8. Therefore, using the above same criteria of node weights of 0 or +ve values being deselected from further quantum computations and node-assignments, node H would be deselected.

General example of a neutral atom quantum computer system set-up

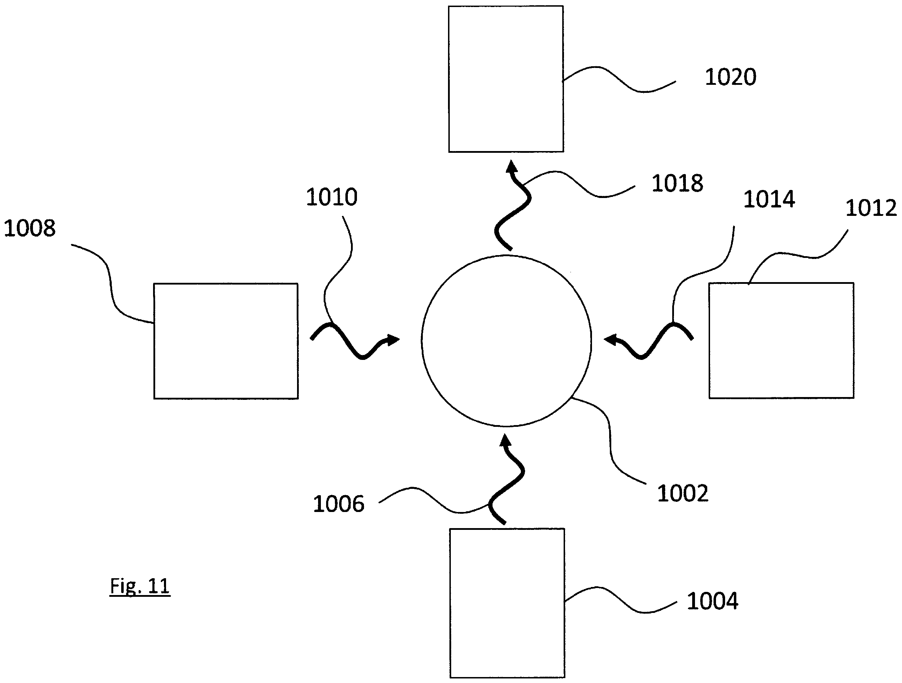

There now follows a discussion of an example analogue quantum computing system for optional use with the method and system presented herein. As discussed above, the method may in principle be applied to other analogue quantum computers such as ion trapped QCs. The method may be enacted by an apparatus, a system of components, a device or a plurality of devices. Figure 11 shows a general schematic of a set-up for neutral atom quantum computer. The set-up may be referred to as a 'quantum computing system'.

As a schematic, the positions and configurations of the elements in figure 11 are not supposed to imply any real-world size, positioning or configuration of features, but merely to illustrate an example of the key functioning components of a neutral atom quantum computing system that can be used with the methods and systems discussed herein.

In figure 11, a chamber 1002 is provided that accommodates a plurality of atoms. The atoms are of the same element, hence are, from a chemical standpoint, identical when no external interactions are imposed upon them. The atoms are unbound to other atoms in the group, for example, by being in a gaseous matter state. Atoms used in the chamber 1002, for trapping, positioning and atomic-state-manipulating may be any suitable atom, for example, but not limited to, any of Rubidium, Caesium, Strontium and Ytterbium. Other elements or element groups may also be used. Preferably the atoms used are those having one or two valence electrons such as alkali metals and alkali earth metals however others may also be used such as rare earth elements.

A group of the atoms are held by a holding apparatus 1004. The holding apparatus 1004 acts to isolate each individual atom such that each atom, in the group, is held in a different point in space (to the other atoms of the group) within the chamber 1002. The term 'isolate' in this context means that the atoms are held away from each other, in space, and do not nominally interact (when in a non-excited atomic state) with adjacently held atoms of the same group. The atoms are thus maintained in a desired position for a period of time longer than they would be in that position if no holding apparatus 1004 were used and the atoms were allowed to move freely. If the atoms are acted upon by an input stimulus such as, for example, an electromagnetic signal of one or more photons, held atoms may interact with other held atoms using particular physical effects such as, but not limited to, the Rydberg blockade. There may be a pattern of spatially separated traps. The pattern may be an array of regular or irregular spaced traps. The pattern may be 1D. The pattern may be 2D insofar that the traps in the pattern all align along one plane. The pattern may be 3D. An example of a set of traps is a 3D array of traps spaced periodically in all of X, Y and Z dimensions, for example a 3D grid. Other patterns are also possible. The spacing in one spatial dimension may be the same or different to the other spatial dimensions.

The holding apparatus 1004 may act to maintain the atoms in their respective stationary positions using different mechanisms including, but not limited to, magnetics traps and optical traps. The holding apparatus 1004 may provide a plurality of trap sites wherein, when first activated to output the traps, typically some trap sites are filled by one or more atoms whilst other trap sites are vacant. Preferably the holding apparatus 1004 is configured to present trap sites that hold only one atom at a time. In figure 11 we assume that the holding apparatus 1004 uses one or more electromagnetic signals, such as optical signals 1006, that are input into the chamber 1002 to affect the optical traps. The electromagnetic signals may be any suitable wavelength, including but not limited to 800-1500nm, more preferably 820 - 880nm. Figure 11 shows the holding apparatus 1004 being external to the chamber 1002, however, the holding apparatus 1004 may form part of the chamber 1002 or be inside the chamber 1002. Although only a single holding apparatus 1004 is shown in figure11, it is envisaged that more than one holding apparatus 1004 may be used.

An atom positioner 1008 is also shown in figure 11. The atom positioner 1008 is an apparatus that is able to controllably move one or more held atoms from one spatial position to another spatial position. For example, the atom positioner 1008 may move an atom trapped in one of the optical trap sites to another different trap site. Figure 11 shows the atom positioner 1008 being external to the chamber 1002, however, the atom positioner 1008 may form part of the chamber 1002 or be inside the chamber 1002. Furthermore, the atom positioner 1008 and holding apparatus 1004 may be part of the same device or system for holding and moving the atoms. The atom positioner 1008 may use different technologies to manipulate the position of the atoms including, but not limited to, moving the atoms using magnetic signals or electromagnetic signals such as optical signals 1010. The electromagnetic signals may be any suitable wavelength including, but not limited to, 800-1500nm, more preferably 820 - 880nm. In figure 11 we assume that optical signals 1010 are used such as, but not limited to, optical tweezers. Although only a single atom positioner 1008 is shown in figure 11, it is envisaged that more than one atom positioners 1008 may be used.

An atomic state actuator 1012 is also shown in figure 11. This atomic state actuator 1012 outputs one or more signals to control and manipulate the atomic states of one or more of the atoms in the chamber 1002, preferably the trapped atoms, i.e., it actuates the transition between atomic states. The signals output by the atomic state actuator 1012 are electromagnetic signals 1014 of one or more photons. Different signals may be output by the atomic state actuator 1012 including signals at different wavelengths. Each wavelength may correspond to (i.e., be resonant with) a different atomic transition. The atomic transition may occur through single-photon absorption or multiple-photon absorption, such as two-photon absorption. This may be accomplished using two (or more) different EM sources such as lasers or other EM sources. These two EM sources may have different wavelengths.

Although only a single atomic state actuator 1012 is shown in figure 11, it is envisaged that more than one atomic state actuator 1012 may be used. For example, a first atomic state actuator 1012 may output a different wavelength or set of wavelengths than a second atomic state actuator 1012. The atomic state actuator may facilitate the transition between atomic states of a single trapped atom or a plurality of trapped atoms. For example, two or more, three or more, trapped atoms, or all of the trapped atoms. Figure 11 shows the atomic state actuator 1012 being external to the chamber 1002, however, the atomic state actuator 1012 may form part of the chamber 1002 or be inside the chamber 1002. The electromagnetic wavelength for transitioning a rubidium atom to the Rydberg state may be 297nm. The electromagnetic wavelength for transitioning a Caesium atom to the Rydberg state may be 318.6nm.

Preferably any electromagnetic signals used to trap and move the atoms are preferably different, at least in wavelength, to the electromagnetic EM signals used to manipulate the quantum states of the atoms. In particular, any EM signals for trapping and moving the atoms are preferably off-resonance, i.e., the wavelength of the holding and positioning electromagnetic signals do not act to excite the atom between different atomic states.

A detector 1020 is also shown in figure 11. This detector 1020 is used to monitor electromagnetic signals 1018 output from the atoms in the chamber 1002. This detector 1020 may comprise a camera. The camera may be used to image the fluorescence output by the atoms held by the holding apparatus 1004. Figure 11 shows the detector 1020 being external to the chamber 1002, however, the detector 20 may form part of the chamber 1002 or be inside the chamber 1002.

An example of the general operation of the neutral atom quantum computing system may be as follows, wherein any of the following steps may be omitted, combined, rearranged in order, or adapted using features from other examples herein. Furthermore, other steps may be included before, at the same time, or after any of the steps listed below.

A) Firstly, the holding apparatus 1004 emits signals into the chamber 1002 to create a plurality of optical traps.

B) Some of the ensemble of atoms in the chamber 1002 are automatically trapped by the plurality of traps.

C) The atom positioner 1008 is then optionally used to move some, or all, of the trapped atoms between traps so that at least a particular set of the traps are each filled by an atom. This set of traps may be referred to as a 'register'. The detector 1020 may be used in this process to help identify which traps are occupied or vacant. In some examples the atom positioner 1008 may not be required.

D) The atomic state actuator 1012 outputs one or more electromagnetic signals 1014 to control atomic state transitions of at least one of the atoms. This step may be performed a plurality of times to implement processing operations of the quantum computer, for example, time-sequentially inputting a plurality of electromagnetic signals that provide an amplitude-time profile and a frequency-time profile.

E) The detector 1020 is used to determine the atomic states of the atoms after the signals in step D) have been performed.

The quantum system may be re-set by at least removing the traps. The quantum system may then be re-initialised for a further quantum computation by repeating steps A)-E) above for a further time period.

Any features described above in the above general example of a neutral atom quantum computer set-up of figure 11, including but not limited to: the atoms used; the atomic state actuator 1012; the atom positioner 1008; the holding apparatus 1004; the detector 1020; the general operation; may be used with any other example presented herein.

**Claims**

1. A method for determining a set of one or more objects, representable by a respective set of one or more nodes of a graph, using a quantum computer;

   the quantum computer using matter particles to represent a plurality of qubits;
   the graph comprising:

   a plurality of nodes;
   a plurality of edges;

   the method comprising:

   positioning a first set of the matter particles in the quantum computer according to a first spatial layout, wherein a determination of the first spatial layout comprises assigning at least one spatial position in the layout to at least one node of the plurality of nodes using data associated with at least one edge of the graph; the first spatial layout associated with a first subset of nodes of the plurality of nodes;
   performing a first quantum computation, using the quantum computer, using the first set of the matter particles spatially positioned according to the first spatial layout, the first quantum computation providing a first output set of one or more nodes;
   positioning a second set of the matter particles in the quantum computer according to a second spatial layout; the second spatial layout associated with a second subset of the plurality of nodes wherein at least one graph node not in the second subset is:

   a node of the first output set; or,
   a node that is edge connected to a node of the first output set via a single edge connection;

   performing a second quantum computation, using the quantum computer, using the second set of the matter particles spatially positioned according to the second spatial layout, the second quantum computation providing a second output set of one or more nodes;
   determining the set of one or more objects at least from the second output set.

2. The method of Claim 1 wherein the number of nodes of the plurality of nodes of the graph is greater than the number of nodes of the first subset of nodes.

3. The method may of Claims 1 or 2 wherein the method generates a first subgraph of the graph, the first subgraph comprising the first subset of nodes of the plurality of nodes; the first quantum computation encodes the first subgraph.

4. The method may of any preceding Claim wherein the method generates a second subgraph from the graph, the second subgraph comprising the second subset of the plurality of nodes; the second spatial layout is associated with the second subgraph; the second quantum computation encodes the second subgraph.

5. The method may of any preceding Claim wherein the determination of the first spatial layout and/or second spatial layout uses a greedy process.

6. The method of any preceding claim wherein the first output set is an independent set of nodes of the first subgraph.

7. The method of any preceding claim wherein the second output set is an independent set of nodes of the second subgraph.

8. The method of any preceding claim wherein the determined set of one or more nodes comprises: at least one node of the first output set; and, at least one or more nodes of the second output set.

9. The method of any preceding claim wherein the determination of the first spatial layout comprises:

   selecting a first spatial position for a first matter particle; the first matter particle corresponding to a first node of the first subset;
   selecting a second spatial position for a second matter particle; the second matter particle corresponding to a second node of the first subset that is different to the said first node; the second spatial position being a different position in the first spatial layout than the first spatial position; the selection of the second spatial position being based on the data associated with at least one edge of the graph.

10. The method of any preceding claim wherein the first and/or second spatial layout are generated based on an underlying lattice of possible spatial positions.

11. The method of any preceding claim wherein the plurality of nodes comprises a plurality of weighted nodes; the plurality of edges comprises a plurality of weighted edges.

12. The method of claim 11 wherein the method determines the second subset of the plurality of nodes by modifying the weight of a node that is edge connected to a node of the first output set.

13. The method of claim 12 wherein the method modifies the weight of any one or more nodes that are edge-connected to any of the nodes of the output set, using an edge weight.

14. The method of claims method determines the second subset of the plurality of nodes by:

a) comparing a modified node weight to a threshold; and,
b) not including, second subset of the plurality of nodes, the node with the said modified node weight based on the comparison.

15. A system for determining a set of one or more objects representable by a respective set of one or more nodes of a graph; the system comprising a quantum computer;

the quantum computer using matter particles to represent a plurality of qubits;
the graph comprising:

a plurality of nodes;
a plurality of edges;

the system configured to:

position a first set of the matter particles in the quantum computer according to a first spatial layout, wherein a determination of the first spatial layout comprises assigning at least one spatial position in the layout to at least one node of the plurality of nodes using data associated with at least one edge of the graph; the first spatial layout associated with a first subset of nodes of the plurality of nodes;
perform a first quantum computation, using the quantum computer, using the first set of the matter particles spatially positioned according to the first spatial layout, the first quantum computation providing a first output set of one or more nodes;
position a second set of the matter particles in the quantum computer according to a second spatial layout; the second spatial layout associated with a second subset of the plurality of nodes wherein at least one graph node not in the second subset is:

a node of the first output set; or,
a node that is edge connected to a node of the first output set via a single edge connection;

perform a second quantum computation, using the quantum computer, using the second set of the matter particles spatially positioned according to the second spatial layout, the second quantum computation providing a second output set of one or more nodes;
determine the set of one or more objects at least from the second output set.

Fig. 2

102

Fig. 1

100

Fig. 4

100

Fig. 6

102a

LE

Fig. 3

104

Fig. 5

100a

E

Fig. 8

100

104a

Fig. 7

Fig. 10

Fig. 9

Fig. 11

## EUROPEAN SEARCH REPORT

| | Application Number |
|---|---|
| | EP 24 31 5599 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XU HANJING ET AL: "Divide and Conquer-based Quantum Algorithms for Maximum Independent Set on Large Separable Graphs", 2024 IEEE INTERNATIONAL CONFERENCE ON QUANTUM COMPUTING AND ENGINEERING (QCE), IEEE, vol. 1, 15 September 2024 (2024-09-15), pages 87-97, XP034794021, DOI: 10.1109/QCE60285.2024.00020 [retrieved on 2025-01-10] * abstract; figure 6 * * page 87, column 2, line 16 - line 39 * * page 89, column 1, line 21 - page 90, column 2, line 18 * * page 94, column 1, line 10 - page 95, column 1, line 5 * ----- | 1-15 | INV. G06N10/40 G06N10/60 |

**TECHNICAL FIELDS SEARCHED (IPC)**

G06N

The present search report has been drawn up for all claims

| Place of search | Date of completion of the search | Examiner |
|---|---|---|
| The Hague | 18 May 2025 | Rousset, Antoine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. SERRET et al.** Solving optimization problems with Rydberg analog quantum computers: Realistic requirements for quantum advantage using noisy simulation and classical benchmarks. *arXiv: 2006.11190v3*

- **J. BLAZEWICZ et al.** The disjunctive graph machine representation of the job shop scheduling problem. *Europe Journal of Operational Research*, December 2000, vol. 127 (2)